Europäisches Patentamt

European Patent Office

Office européen des brevets

(19)

(11) Publication number: **0 055 047**
A2

(12) **EUROPEAN PATENT APPLICATION**

(21) Application number: 81305737.9

(51) Int. Cl.³: **H 02 G 7/20**

(22) Date of filing: **04.12.81**

(30) Priority: **05.12.80 GB 8039140**

(71) Applicant: **BICC Limited, 21, Bloomsbury Street, London, WC1B 3QN (GB)**

(43) Date of publication of application: **30.06.82**
**Bulletin 82/26**

(72) Inventor: **Adam, John Francis, 48 Elkington Road, Yelvertoft Northamptonshire (GB)**

(84) Designated Contracting States: **AT BE CH DE FR IT LI LU NL SE**

(74) Representative: **Ross Gower, Edward Lewis et al, BICC Limited Patents Department 38 Wood Lane, London W12 7DX (GB)**

(54) **Improvements in overhead electric transmission lines.**

(57) In an overhead electric transmission line, risk of fracture of a sound insulator string arising from fracture of another insulator string supporting conductors at a pylon is reduced by arranging for a link 5, 15 interconnecting the insulator strings 3 to carry energy dissipating members 7, 17 which dissipate the energy arising from fracture of one of the strings. As the sound insulator string moves transversely to a position in which it is co-linear with a single position of suspension of the strings from a cross-arm 2, the links 5, 15 are caused to pivot and the parts of the members 7, 17 extending between the pivotal axes 6, 16 and the ends of the members nearer restraining stops 8, 18 are gradually and smoothly distorted to an arcuate shape so that the additional load to which the sound insulator string is subjected gradually and smoothly increases from zero to a value such that the resultant load on the sound insulator string does not exceed the maximum safe working load of the string.

EP 0 055 047 A2

ACTORUM AG

IMPROVEMENTS IN OVERHEAD ELECTRIC TRANSMISSION LINES

This invention relates to overhead electric transmission lines of the kind in which an electric conductor or a plurality of electric conductors is or are suspended in long lengths between pylons or other upstanding supporting structures at spaced positions along the length of the line, all such supporting structures hereinafter, for convenience, being included in the generic term "pylon".

The invention is particularly concerned with overhead electric transmission lines of this kind in which single electric conductors or separate groups of electric conductors are suspended from a transversely extending cross-arm or transversely extending cross-arms of each of a number of spaced pylons by insulators, each single conductor being suspended from a cross-arm of each pylon by at least two transversely spaced insulators or strings of insulators or the conductors of each group being transversely spaced apart and each conductor of the group being suspended from a cross-arm of each pylon by a separate insulator or by a separate string of insulators, in both cases the transversely spaced insulators or strings of insulators being inter-connected at each of their ends by at least one link and the link remote from the conductor or conductors being secured to the cross-arm at a single position at or near one end of the cross-arm. An overhead electric transmission line of this particular kind will hereinafter be referred to as "of the kind described".

2

Usually, but not necessarily, each conductor or each separate group of conductors is supported by two mutually spaced insulators or strings of insulators and, where the context permits, the invention will be described with respect to overhead electric transmission lines of the kind described in which each group of conductors is supported by two mutually spaced insulators or strings of insulators, but it is to be clearly understood that the invention is also applicable to the case where each conductor or each group of conductors of an overhead transmission line is supported by three or more than three mutually spaced insulators or strings of insulators.

It has been found that where an insulator or a string of insulators of two mutually spaced insulators or strings of insulators supporting a conductor of a group of two transversely spaced conductors of an overhead electric transmission line of the kind described is damaged to such an extent that the insulator or string of insulators is fractured, the sound insulator or sound string of insulators supporting the other conductor of the group moves transversely towards a position in which the insulator or string of insulators and the conductor supported thereby are co-linear with the single position on the cross-arm from which the group of conductors is suspended and the conductor hitherto supported by the fractured insulator or fractured string of insulators moves transversely towards a position in which the conductor lies co-linear with the other conductor and with the single position on the cross-arm from which the group of conductors is suspended. When the two conductors reach this position, the sound insulator or sound string of insulators is subjected to bending and other stresses caused by a sudden shock load arising to a major extent from the forces in the conductor hitherto supported by the fractured insulator or fractured string of insulators. This shock load can be several times greater than the load which the sound insulator or sound string of insulators normally has to support and, since the application of this greater load is sudden, there is a substantial risk that, as a result, the sound insulator or string of insulators will also fracture and cause complete breakdown of the line and possible consequential damage to one or more of the pylons. There is an additional risk that, due to transitory effects caused in the parts of the fractured insulator or fractured string of insulators and in the sound insulator or sound string of insulators due to fracture of the insulator or string of insulators, collision of the insulators or strings of insulators may occur,damage to the hitherto sound insulator or sound string of insulators may result, and consequential damage to one or more pylons may follow.

Several proposals have been made for reducing the risk of fracture of a sound insulator or sound string of insulators of a group of arising from fracture of the other or another insulator or string of insulators of the group but, for various reasons, none of these proposals has proved to be entirely satisfactory and the problem of protecting a sound insulator or sound string of insulators of a group from the bending and other other stresses arising from fracture of the other or another insulator or string of insulators of the group is still unsolved.

It is an object of the present invention to provide a solution to this problem.

According to the invention, in an overhead electric transmission line of the kind described, at at least one and preferably each pylon, the link or links interconnecting the insulators or strings of insulators supporting a single conductor or the conductors of a group of transversely spaced conductors at one or each end of the insulators or strings of insulators carries means for so dissipating the energy arising from fracture of an insulator or string of insulators that, as the or each sound insulator or string of insulators and the conductor/s supported thereby move transversely to a position in which they are co-linear with the single position of suspension from the cross-arm, the additional load to which the or each sound insulator or string of insulators is subjected increases gradually
and smoothly from zero to a value such that the
resultant load on the or each sound insulator or string
of insulators does not exceed the maximum safe working
load of the insulator or string of insulators.

Since the additional load to which the or each sound
insulator or string of insulators will be subjected in
the event of fracture of the other or another insulator
or string of insulators will be controlled by the energy
dissipating means, the sound insulator or string
of insulators will not be subjected to a sudden shock
load several times the load to which it is subjected
under normal operating conditions and, consequently, the
or each sound insulator or string of insulators will be
able to support the resultant load arising from the
fracture of the other or anotherinsulator or string of
insulators until the faulty insulator or string of
insulators is repaired or replaced.

Preferably, the energy dissipating means is of such a
form that over an initial major part of the transverse
movement of the sound insulator or string of insul-
ators, the value of the additional load is zero, the
value of the additional load then increasing gradually
and smoothly over the latter minor portion of said
transverse movement.

In a preferred embodiment the or each inter-connecting link at the end of the group of insulators or strings of insulators nearer the cross-arm is a yoke of substantially triangular shape, the insulators or strings of insulators being connected to the yoke at positions near two of its apices and the yoke being connected to the cross-arm at a position near the third of its apices. In this case, the energy dissipating means preferably comprises a substantially rigid elongte member of metal or metal alloy which is pivotally mounted near one of its ends on the inter-connecting link or links at a position lying on a line substantially midway between two transversely spaced insulators or strings of insulators, which extends along said line and which, at or near the other of its ends, is restrained against movement transverse to the link by stops carried by the link, the arrangement being such that, as the link is caused to pivot when one of the insulators or strings of insulators fractures, a part of the elongate energy dissipating member extending between its pivotal axis and the end of the member nearer the restraining stops, is gradually and smoothly distorted to an arcuate shape so that the additional load to which the sound insulator or string of insulators is subjected gradually and smoothly increases from zero to said maximum value.

At the end remote from the cross-arm, two transversely spaced insulators or strings of insulators may be interconnected by a first yoke and two conductors supported by the insulators or strings of insulators may be suspended from a second yoke which is pivotally connected to the first yoke at a position lying on a line substantially mid-way between said two transversely spaced insulators or string of insulators by at least one elongate energy dissipating member which, near one of its ends, is secured to the second yoke, which extends along said line and which, at or near the other of its ends, is restrained against transverse movement relative to the first yoke by stops carried by the first yoke, the arrangement being such that, as the first yoke is caused to pivot when one of the insulators or strings of insulators fractures, a part of the elongate energy dissipating member extending between its pivotal axis and the end of the member nearer the restraining stops, is gradually and smoothly distorted to an arctuate shape so that the additional load to which the sound insulator or string of insulators is subjected gradually and smoothly increases from zero to said maximum value.

A part of the or each elongate energy dissipating member extending between its pivotal axis and the end of the member nearer the restraining stops is smoothly tapered a direction towards said end.

At both ends of the insulators or strings of insulators, elongate energy dissipating members may be provided on opposite sides of the yoke or yokes or a single elongate energy dissipating member may be sandwiched between two overlying yokes.

The invention also includes, for use in an overhead electric transmission line of the kind described, improved energy dissipating means as hereinbefore described.

The invention is further illustrated by a description, by way of example, of a preferred insulator arrangement for supporting a group of two transversely spaced conductors with reference to the accompanying drawings, in which:-

Figure 1 is a fragmental front view of a cross-arm of a pylon from which the group of two transversely spaced conductors is suspended;

Figure 2 is a diagrammatic representation of the preferred inter-connecting link and energy dissipating means for connection to the upper ends of the strings of insulators shown in Figure 1, and

Figure 3 is a diagrammatic representation of the preferred links and energy dissipating means for connection to the lower ends of the strings of insulators shown in Figure 1.

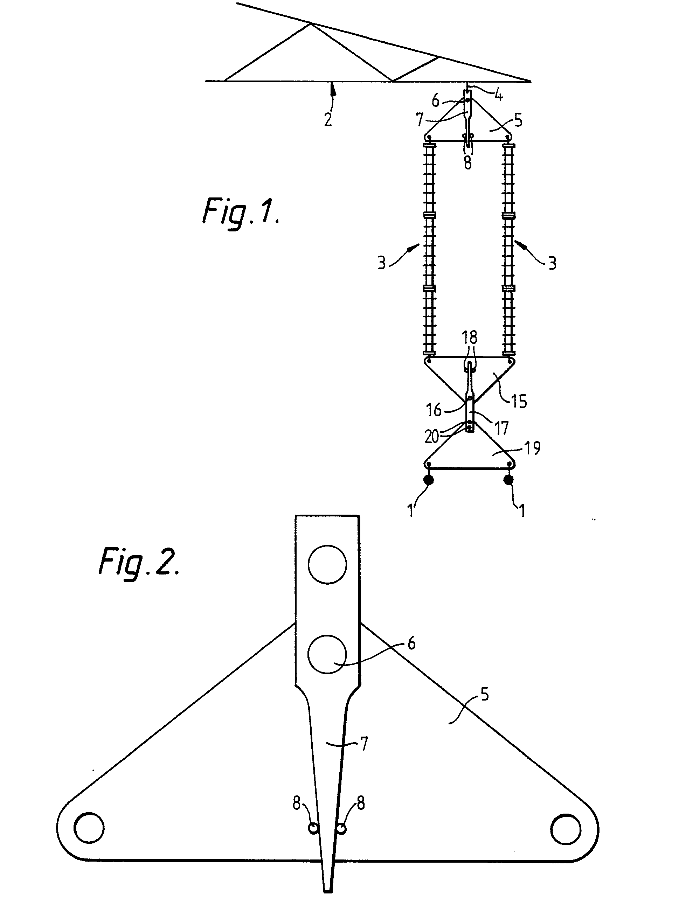

Referring to the drawings, two electric conductors 1 are suspended from a cross-arm 2 of a pylon by two strings 3 of electric insulators transversely spaced on opposite sides of the centre line of the conductors. At the upper ends of the insulator strings 3, the strings are connected to a yoke 5 of substantially triangular shape at positions near two of its apices. At a position near the third or upper of its apices, the yoke 5 is pivotally connected at 6 to a pair of elongate energy dissipating members 7 located on opposite sides of the yoke, each member being suspended from the cross-arm 2 by a shackle 4. Each elongate energy dissipating member 7 extends along the centre line of the yoke 5 between a pair of restraining stops 8 and, as will be seen clearly in Figure 2, over a part of its length extending between its pivotal axis 6 and the end nearer the restraining stops, is smoothly tapered towards that end.

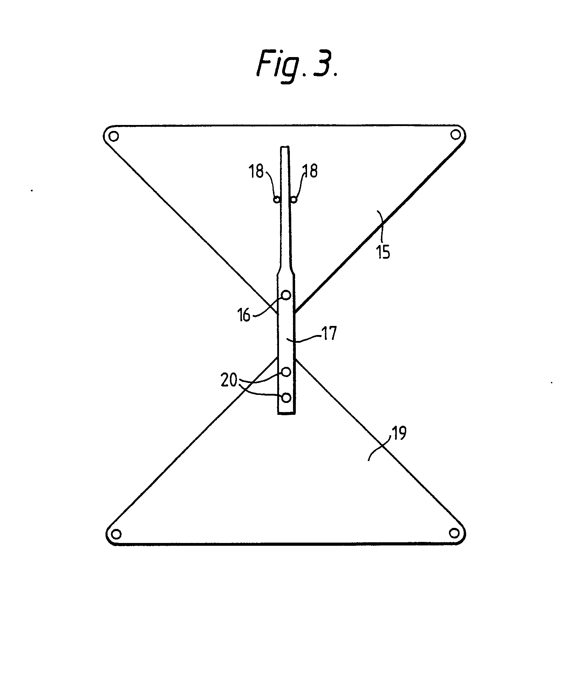

At the lower ends of the insulator strings 3, each insulator string is connected to a yoke 15 of substantially triangular shape at positions near two of its apices. Pivotly mounted at a position 16 near the third or lower of the apices of the yoke 15 are a pair of elongate energy dissipating members 17 located on opposite sides of the yoke. The lower ends of the elongate energy dissipating members 17 are secured on opposite sides of a yoke 19 of substantially triangular shape at a position near one of its apices. Each elongate energy dissipating member 17 extends upwardly along the centre line

10

of the yoke 15 and between a pair of restraining stops 18 positioned on opposite sides of the centre line and, as will be seen clearly from Figure 3, the part of each member 17 extending between its pivotal axis 16 and the end of the member nearer the restraining stops is smoothly tapered towards that end.

The conductors 1 are suspended from the lower apices of the yoke 19.

In the event of fracture of one of the insulator strings 3, the sound insulator string will move transversely to a position in which it is co-linear with the single position of suspension from the cross-arm 2 and as the links 5 and 15 pivot, the parts of the elongate energy dissipating members 7 and 17 extending between the pivotal axes 6, 16 and the ends of the members nearer the restraining stops 8, 18, are gradually and smoothly distorted to an arcuate shape so that the additional load to which the sound insulator string is subjected gradually and smoothly increases from zero to a value such that the resultant load on the sound insulator string does not exceed the maximum safe working load of the string.

CLAIMS:

1.   An overhead electric transmission line of the kind described, wherein at at least one pylon, the link or links interconnecting the insulators or strings of insulators supporting a single conductor or the conductors of a group of transversely spaced conductors at one or each end of the insulators or strings of insulators carries means for so dissipating the energy arising from fracture of an insulator or string of insulators that, as the or each sound insulator or string of insulators and the conductor/s supported thereby move transversely to a position in which they are co-linear with the single position of suspension from the cross-arm, the additional load to which the or each sound insulator or string of insulators is subjected increases gradually and smoothly from zero to a value such that the resultant load on the or each sound insulator or string of insulators does not exceed the maximum safe working load of the insulator or string of insulators.

2.   An overhead electric transmission line as claimed in Claim 1, wherein the energy dissipating means is of such a form that over an initial major part of the transverse movement of the sound insulator or string of insulators, the value of the additional load is zero, the value of the additional load then increasing gradually and smoothly over the latter minor portion of said transverse movement.

3.   An overhead electric transmission line as claimed in Claim 1 or 2, wherein the or each inter-connecting link at the end of the group of insulators or strings of insulators nearer the

0055047

cross-arm is a yoke of substantially triangular shape, the insulators or strings of insulators being connected to the yoke at positions near two of its apices and the yoke being connected to the cross-arm at a position near the third of its apices.

4.    An overhead electric transmission line as claimed in any one of the preceeding Claims, wherein the energy dissipating means at the end of the group of insulators or strings of insulators nearer the cross-arm comprises a substantially rigid elongate member of metal or metal alloy which is pivotally mounted near one of its ends on the inter-connecting link or links at a position lying on a line substantially mid-way between two transversely spaced insulators or strings or insulators which extends along said line and which, near the other of its ends, is restrained against movement transverse to the link by stops carried by the link, the arrangement being such that, as the link is caused to pivot when one of the insulators or strings of insulators fractures, a part of the elongate energy dissipating member extending between its pivotal axis and the end of the member nearer the restraining stops, is gradually and smoothly distorted to an arcuate shape so that the additional load to which the sound insulator or string of insulators is subjected gradually and smoothly increases from zero to said maximum value.

5.    An overhead electric transmission line as claimed in any one of the preceding Claims, wherein, at the end remote from the cross-arm, two transversely spaced insulators or strings of insulators are inter-connected by a first yoke and two conductors supported by the insulators or strings of insulators are suspended from a second yoke which is pivotally connected to the first yoke at a position lying on a line substantially mid-way between said two transversely spaced insulators or strings of insulators by at least one elongate energy dissipating member which, near one of its ends, is secured to the second yoke, which extends along said line and which, at or near the other of its ends, is restrained against transverse movement relative to the first yoke by stops carried by the first yoke, the arrangement being such that, as the first yoke is caused to pivot when one of the insulators or strings of insulators fractures, a part of the elongate energy dissipating member extending between its pivotal axis and the end of the member nearer the restraining stops, is gradually and smoothly distorted to an arctuate shape so that the additional load to which the sound insulator or string of insulators is subjected gradually and smoothly increases from zero to said maximum value.

6.   An overhead electric transmission line as claimed in Claim 5, wherein each yoke at the end remote from the cross-arm is of substantially triangular shape, the insulators or strings of insulators being connected to the first yoke at positions near two of its apices and a conductor or group of conductors being suspended from each of two of the apices of the second yoke.

7.   An overhead electric transmission line as claimed in in any one of Claims 4 to 6, wherein a part of the or each elongate energy dissipating member extending between its pivotal axis and the end of the member nearer the restraining stops is smoothly tapered in a direction towards said end.

8.   An overhead electric transmission line as claimed in any one of Claims 3 to 7, wherein elongate energy dissipating members are provided on opposite sides of the yoke or yokes or a single elongate energy dissipating member is sandwiched between two overlying yokes.

14

9.    For use in an overhead electric transmission line of the
kind described, energy dissipating means comprising at least one
link for interconnecting the insulators or strings of insulators,
which link carries at least one pair of restraining stops mutually
spaced on opposite sides of the centre line of the link and,
pivotally connected or adapted to be pivotally connected to the
link at a position on its centre line, at least one elongate energy
dissipating member which extends along the centre line of the link
and between said restraining stops, the part of the elongate energy
dissipating member extending between its pivotal axis and the end
of the member nearer the restraining stops being of such a cross-
sectional area and shape that, when in use the link will be caused
to pivot when one of the insulators or strings or insulators of an
overhead electric transmission line fractures, said part of the
elongate energy dissipating member will be gradually and smoothly
distorted to an arcuate shape.

10.    Energy dissipating means as claimed in Claim 9, wherein the
part of the elongate energy dissipating member extending between
its pivotal axis and the end of the member nearer the restraining
stops is smoothly tapered in a direction towards said end.

0055047

Fig.1.

Fig.2.

# Fig. 3.